# EUROPEAN PATENT SPECIFICATION

(11) **EP 4 148 957 B1**
(45) Date of publication and mention of the grant of the patent: **12.08.2026**
(21) Application number: 21195784.0
(22) Date of filing: 09.09.2021
(51) Int. Cl.: H02K 1/276, H02K 29/03

(54) **HIGH-FREQUENCY ROTATING STRUCTURE**
HOCHFREQUENZDREHSTRUKTUR
STRUCTURE DE ROTATION À HAUTE FRÉQUENCE

(43) Date of publication of application: 15.03.2023
(73) Proprietor: Hiwin Mikrosystem Corp., Taichung City 40852 (TW)
(72) Inventor: SHIAO, RUEI-BIN, 40852 Taichung City (TW); CHI, CHENG-TE, 40852 Taichung City (TW); CHENG, ZHE-WEI, 40852 Taichung City (TW); HSU, MING-CHANG, 40852 Taichung City (TW)
(74) Representative: Lang, Christian

(56) References cited:
- WO-A1-2020/110191
- JP-A- 2007 236 096
- US-A1- 2007 145 851

## Description

### BACKGROUND OF THE INVENTION

### Field of Invention

The invention is related to motors, and more particularly to a high-frequency rotating structure.

### Related Art

In order to meet the high-precision requirements of precision machinery for machining accuracy, various technical improvements have been disclosed in the prior art for improving the rotating motor as a power source. Among the technical improvements, the rotation output of a rotor without a perfect roundness is made close to the sine wave, such as a rotor with an outer contour of the radial cross-section being roughly in a quincuncial shape, because cutting lines caused by stalling of rotation of the machine tool machining on the machined object can be avoided, a rotor with a shape closer to a perfect circle is more suitable to be used as the rotating component of a spindle motor.

Certainly, a rotor with a quincuncial radial cross-section can reduce stalling during rotation, but due to its uneven distribution of weight, it is very easy to form stress concentration under high-frequency rotation, which leads to deformation of the silicon steel plates used to form the rotor and shortening of the service life of the motor.

The international patent publication WO 2020 / 110 191 A1 describes a rotor core of a rotating electrical machine comprising petal parts that are arranged in a manner corresponding to respective magnetic poles.

### SUMMARY OF THE INVENTION

Therefore, a main object of the invention is to provide a high-frequency rotating structure capable of reducing stress concentration of a rotor without a perfect roundness under high-frequency rotation, reducing component deformation, and prolonging a service life of a motor.

In order to achieve the above-mentioned object, a high-frequency rotating structure provided by claim 1 of the invention has an annular rotating element with a quincuncial outer periphery, a plurality of radially arranged accommodating grooves respectively disposed in an annular body of the rotating element, a plurality of hole-shaped magnetic barrier spaces respectively disposed in the annular body, and respectively communicated with one of two ends of each of the accommodating grooves, and a plurality of magnetic assemblies respectively embedded in each of the accommodating grooves, characterized in that, a shortest first distance A between a groove wall of each of the two ends of each of the accommodating grooves and an outer annular surface of the body, and a shortest second distance B between a hole wall of each of the magnetic barrier spaces and the outer annular surface of the body are defined by the following formula 1: $α = \frac{A}{B} \times 100 % , 122 % \geq α \geq 90 %$

Wherein, the outer annular surface is composed of a plurality of first arcuate surfaces and a plurality of second arcuate surfaces, and an arch length of each of the first arcuate surfaces is greater than an arch length of each of the second arcuate surfaces.

Wherein, each of the accommodating grooves respectively extends along a circumference of the body.

Wherein, each of the first distances A is respectively between each of the two ends of each of the accommodating grooves and the second arcuate surface, and each of the second distances B is respectively between each of the magnetic barrier spaces and the second arcuate surface.

Further, each of the accommodating grooves further comprises a first groove segment and two second groove segments respectively located on two ends of the first groove segment, the first groove segment and the second groove segments are communicating with one another, and each of the magnetic barrier spaces is communicated with each of the second groove segments.

Wherein, an expansion angle C, in angular degrees, between the first groove segment and each of the second groove segments, a maximum distance E between the first arcuate surface and a center of curvature of an inner circular surface of the body, and a minimum distance D between the first groove segment and the center of curvature of the inner circular surface of the body are defined by the following formula 2: $β = - 10 \times log \left\{\frac{1}{{\left⌈\left(1-\frac{E - D}{E}\right)\times C\right⌉}^{2}}\right\} , β \geq 42.3$

### BRIEF DESCRIPTION OF THE DRAWINGS

FIG. 1 is a perspective view of a preferred embodiment of the invention;
FIG. 2 is a top view of a preferred embodiment of the invention;
FIG. 3 is a partial enlarged view of a preferred embodiment of the invention in the top view direction;
FIG. 4 is another partial enlarged view of a preferred embodiment of the invention in the top view direction; and
FIG. 5 is a diagram of magnetic lines of force of an example of the invention.

### DETAILED DESCRIPTION OF THE INVENTION

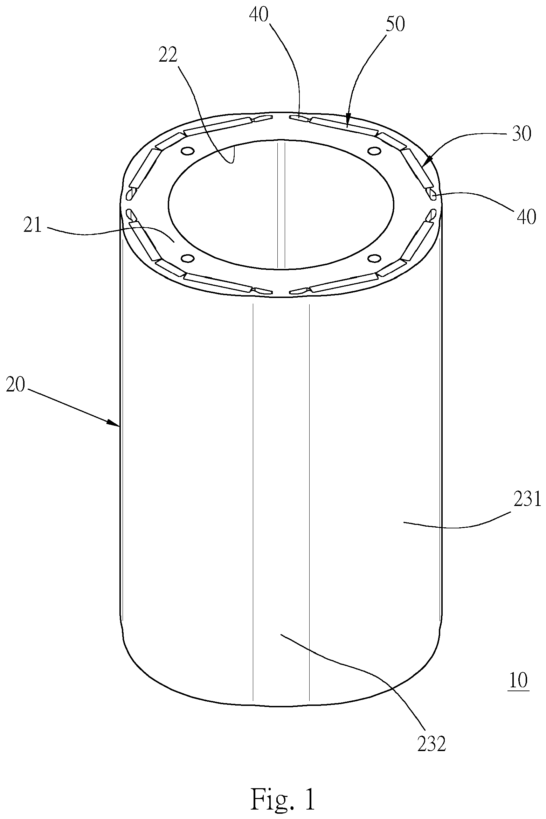

First of all, please refer to FIGS. 1 to 4. A high-frequency rotating structure 10 provided in a preferred embodiment of the invention mainly comprises a rotating element 20, a plurality of accommodating grooves 30, a plurality of magnetic barrier spaces 40, and a plurality of magnetic assemblies 50.

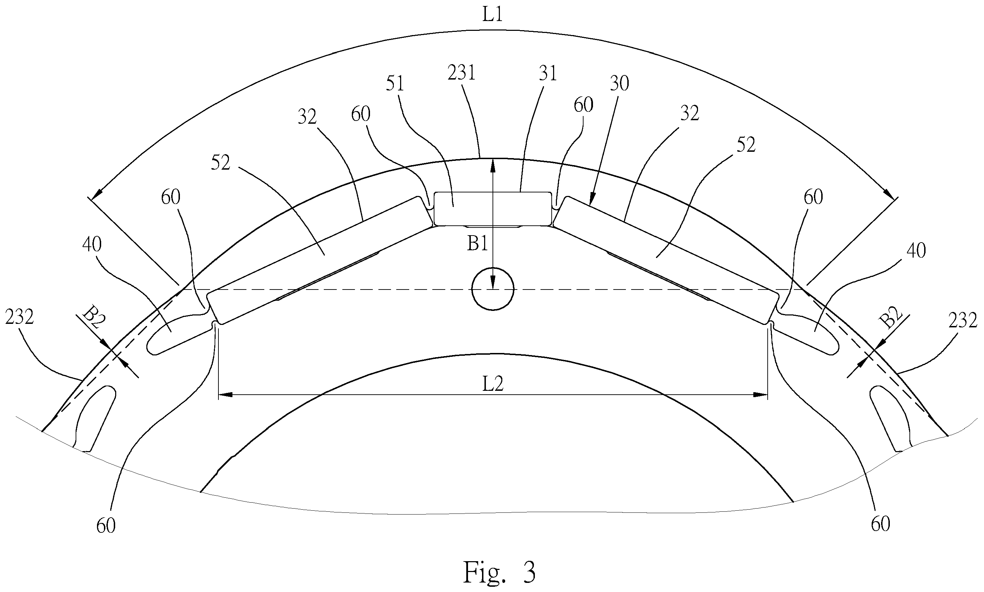

The rotating element 20 is used as a rotor component of a rotating motor, the rotating element 20 structurally comprises an annular body 21 formed by stacking a plurality of silicon steel plates, an inner circular surface 22 located on an inner peripheral side of the body 21, the inner circular surface 22 being a perfect circle with a center along an axial direction of an axis of rotation of the body 21, and an outer annular surface 23 located on an outer peripheral side of the body 21, the roughly quincuncial shaped outer annular surface 23 being a non-perfect circle with a center along an axial direction of an axis of rotation of the body 21. Wherein the outer annular surface 23 without a perfect roundness is formed by a plurality of first arcuate surfaces 231 and a plurality of second arcuate surfaces 232 connecting in sequence, and as shown in FIG. 3, an arch length B1 of the first arcuate surface 231 is greater than an arch length B2 of the second arcuate surface 232, so that a shape of the outer annular surface 23 formed by connection of the first arcuate surfaces 231 and the second arcuate surfaces 232 is close to a contour of a quincuncial shape; wherein, although the circular shape of the inner circular surface 22 is formed by the continuous arcuate surfaces in this embodiment, in actual use, due to disposition of conventional combination structures such as keyway, the circular shape of the inner circular surface 22 is formed by the arcuate surfaces separated by the keyways.

The accommodating grooves 30 are sequentially arranged on the body 21 along a circumferential direction of the body 21 and are spaced apart from one another, and extend in the axial direction of the body 21 to an appropriate depth, and extend along the circumferential direction of the body 21 to a width L2 at least greater than half of an arc length L1 of the first arcuate surface 231, wherein an extension depth of the accommodating grooves 30 can reach an extent of penetrating the body 21 thoroughly, or an extent of not penetrating the body 21 thoroughly, and in this embodiment, the accommodating grooves 30 are made to be not penetrating the body 21 thoroughly.

Further, positions of the accommodating grooves 30 are respectively located on corresponding parts of the body 21 corresponding to the first arcuate surfaces 231, and each of the accommodating grooves 30 comprises a first groove segment 31, and two second groove segments 32 respectively located on two ends of the first groove segment 31, wherein one end of each of the second groove segments 32 is communicated with one of the two ends of the first groove segment 31, and another end of each of the second groove segments 32 is close to a part of the body 21 corresponding to each of the second arcuate surfaces 232.

The hole-shaped magnetic barrier spaces 40 are respectively disposed in the body 23, and are respectively communicated with the other end of each of the second groove segments 32 away from the first groove segment 31, and respectively extend to a part of the body 21 corresponding to each of the second arcuate surfaces 232.

The magnetic assemblies 50 are respectively accommodated and fixed in each of the accommodating grooves 30, and each of the magnetic assemblies 50 corresponds to a pole of the rotating motor, specifically, in this embodiment, a quantity of the magnetic assemblies 50 is four, which corresponds to four poles of the rotating motor. Further, each of the magnetic assemblies 50 further comprises a first magnet 51 and two second magnets 52, the first magnet 51 is embedded in the first groove segment 31, and each of the second magnets 52 is embedded in each of the second groove segments 32 of the same accommodating groove 30.

In order to enable each of the first magnets 51 and each of the second magnets 52 respectively embedded in the accommodating grooves 30 to obtain a better limiting and positioning effect, as shown in FIG. 3, the high-frequency rotating structure 10 further comprises a plurality of limiting protrusions 60, the limiting protrusions 60 are respectively located between the two ends of each of the first groove segments 31 and each of the adjacent second groove segments 32, and between each of the second groove segments 32 and each of the adjacent communicated magnetic barrier spaces 40.

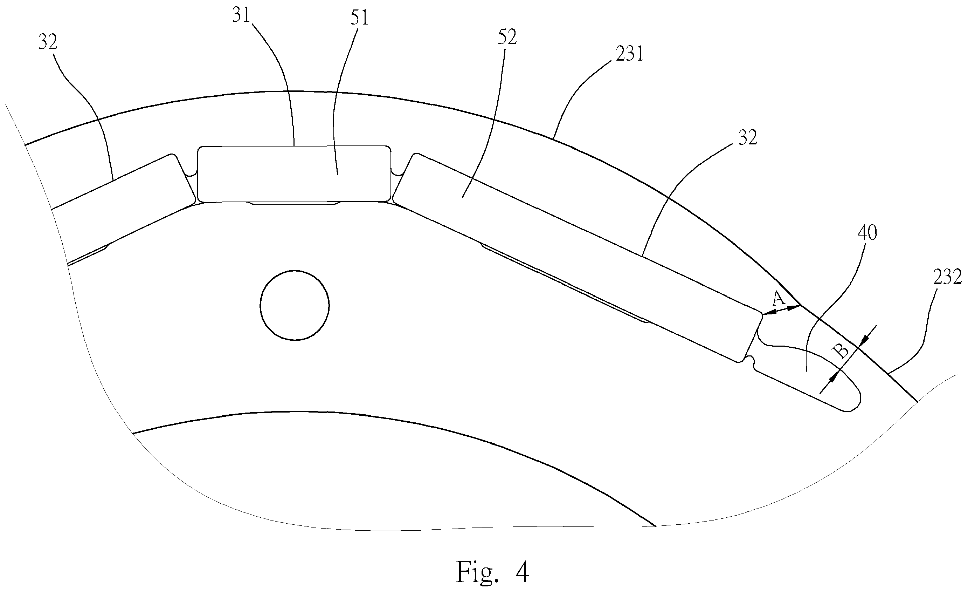

As shown in FIG. 4, on the basis of the above-mentioned technology, in this embodiment, relative positions between each of the accommodating grooves 30, each of the magnetic barrier spaces 40 and the rotating element 20 are further limited to meet a definition of the following formula 1: $α = \frac{A}{B} \times 100 % , 122 % \geq α \geq 90 %$
Wherein, A in formula 1 is a shortest first distance A between a groove wall of each of the accommodating grooves 30 located at the two ends in a width direction and the outer annular surface 23; and
B in formula 1 is a shortest second distance B between a hole wall of each of the magnetic barrier spaces 40 and the outer annular surface 23.

Wherein, the first distance A and the second distance B are linear distances, and end points corresponding to the outer annular surface 23 are located at the corresponding second arcuate surface 232 of the outer annular surface 23.

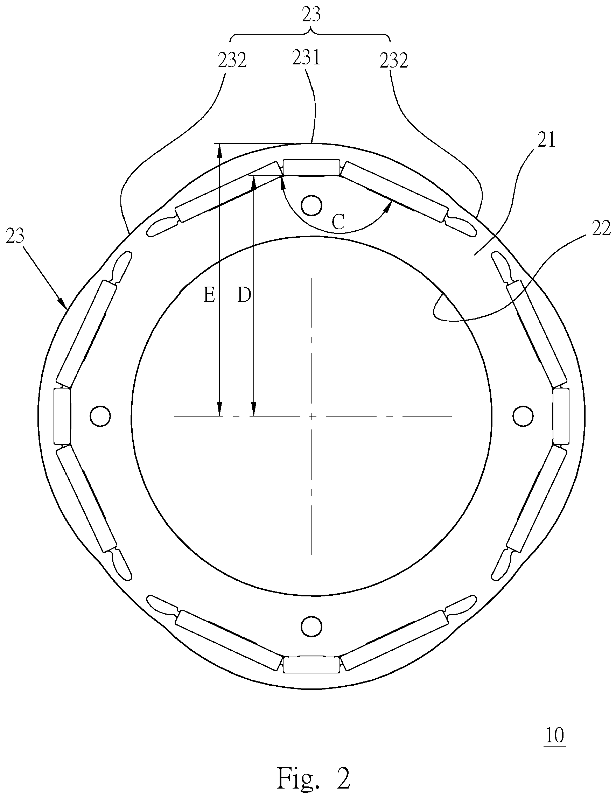

Please refer to FIG. 2 again. Further, in addition to the relative positions between each of the accommodating grooves 30 and the rotating element 20 meeting the formula 1 shown above, but can also be further limited to meet a definition of the following formula 2: $β = - 10 \times log \left\{\frac{1}{{\left⌈\left(1-\frac{E - D}{E}\right)\times C\right⌉}^{2}}\right\} , β \geq 42.3$
Wherein, C in formula 2 is an expansion angle C, in angular degrees, between the first groove segment 31 and the adjacent second groove segment 32 in the single accommodating groove 30;
E in formula 2 is a maximum distance E between the first arcuate surface 231 and a center of curvature of the inner circular surface 22; and
D in formula 2 is a minimum distance D between the first groove segment 31 and a center of curvature of the inner circular surface 22.

With composition of the above-mentioned components, the high-frequency rotating structure 10 used as the rotating motor of a rotor component is capable of avoiding the drawbacks of stress concentration caused by the conventional technology, and therefore capable of preventing deformation of the silicon steel plates, and at the same time further increasing an intensity of the magnetic field.

As shown in a table below, an upper limit of stress depends on a material of the silicon steel plates or a magneto-conductive material. Under the conditions that the α value being 122%, 117%, 116%, 110%, 103%, 98.5% and 95.6%, the β value being 42.7, 42.6, 42.5 and 42.3, a stress of a part of the body 21 corresponding to each of the first distances A and each of the second distances B is less than 300 Mpa, and stress concentration can indeed be effectively reduced, thereby prolonging a service life of the high-frequency rotating structure 10 being used as the rotating motor of the rotor component. Wherein, regarding an assembly method of the first magnet 51 and the second magnets 52, different examples of assembly methods are shown in table 1. Combination 1 in the following table means that the first magnet 51 and the second magnets 52 in each of the magnetic assemblies 50 are respectively combined with the limiting protrusions 60 in an impenetrable contact method and capable of separating from the limiting protrusions 60; the first magnet 51 and the first groove segment 31, and the second magnets 52 and the second groove segments 32 adopt an inseparable combination. Combination 2 in the following table means that the first magnet 51 and the second magnets 52 in each of the magnetic assemblies 50, and the limiting protrusions 60, the first groove segment 31 and the second groove segments 32 are inseparably combined.

**Table 1**

| Examples | | A | B | C | D | E | F | G |
|---|---|---|---|---|---|---|---|---|
| D(mm) | | 30 | 30 | 30 | 29.5 | 29.5 | 29.5 | 29 |
| Bridge center distance (mm) | | 30.5 | 31 | 30 | 29.5 | 31 | 31 | 31 |
| A(mm) | | 1.74 | 1.03 | 1.97 | 2.39 | 1.22 | 1.1 | 1.17 |
| B(mm) | | 1.5 | 1 | 2 | 2.5 | 1 | 1 | 1 |
| C(angular degree) | | 152 | 155 | 151 | 151 | 156 | 156.5 | 158 |
| Combination 1 | Position of stress corresponding to the second distance (MPa) | 260 | 249 | 206 | 202 | 296 | 268 | 286 |
| | Position of stress corresponding to the first distance (MPa) | 298 | 209 | 297 | 286 | 228 | 262 | 218 |
| Combination 2 | Position of stress corresponding to the second distance (MPa) | 284 | 260 | 238 | 232 | 297 | 269 | 280 |
| | Position of stress corresponding to the first distance (MPa) | 223 | 216 | 240 | 224 | 297 | 269 | 280 |
| α value | | 116 | 103 | 98.5 | 95.6 | 122 | 110 | 117 |
| β value | | 42.5 | 42.7 | 42.5 | 42.3 | 42.6 | 42.7 | 42.6 |

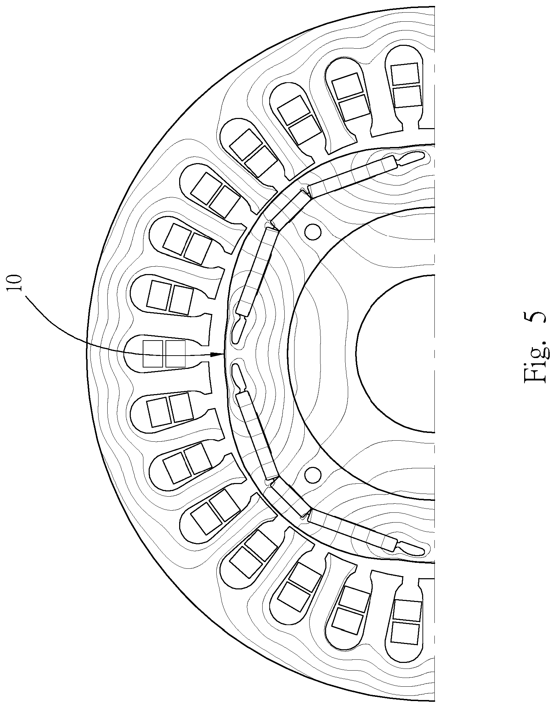

Furthermore, please refer to FIG. 5 for a diagram of magnetic lines of force of the invention, which shows magnetic lines of force of the example B in the above table, and proves that the invention has good magnetic properties.

It is to be understood that the present invention is not limited to the specific embodiments of the invention disclosed in the description above and that various other embodiments of the present invention will be apparent to those skilled in the art. The scope of protection for the present invention is thus not limited to the described embodiments; the scope of protection for the present invention is defined solely by the appended claims.

## Claims

1. A high-frequency rotating structure (10) comprising:
a rotating element (20) having an annular body (21), an inner circular surface (22) in a circle shape extending along an axial direction of an axis of rotation of the body and located on an inner peripheral side of the body, and an outer annular surface (23) without a perfect roundness extending along an axial direction of an axis of rotation of the body and located on an outer peripheral side of the body, the outer annular surface (23) being formed by connecting a plurality of first arcuate surfaces (231) with a plurality of second arcuate surfaces (232);
a plurality of accommodating grooves (30) sequentially arranged on the body along a circumferential direction of the body and spaced apart from one another, and
extending in the axial direction of the body to a predetermined depth, and extending along the circumferential direction of the body to a predetermined width at least greater than half of an arc length of the first arcuate surface (231);
a plurality of magnetic assemblies (50) respectively accommodated in each of the accommodating grooves (30); and
a plurality of hole-shaped magnetic barrier spaces (40) respectively disposed in the body, and respectively communicated with one of two ends in a width direction of each of the accommodating grooves (30),
wherein a shortest first distance A between a groove wall of each of the two ends in a width direction of each of the accommodating grooves (30) and the outer annular surface (23), and a shortest second distance B between a hole wall of each of the magnetic barrier spaces (40) and the outer annular surface (23) are defined by the following formula 1: $α = \frac{A}{B} \times 100 % , 122 % \geq α \geq 90 % ,$
wherein each of the accommodating grooves (30) is respectively located on a part of the body corresponding to each of the first arcuate surfaces (231), and each of the accommodating grooves (30) further comprises a first groove segment (31), and two second groove segments (32) respectively connecting with two ends of the first groove segment (31), and each of the magnetic barrier spaces (40) is communicated with each of the second groove segments (32),
wherein an expansion angle C, in angular degrees, between the first groove segment (31) and each of the second groove segments (32), a maximum distance E between the first arcuate surface (231) and a center of curvature of the inner circular surface (22) of the body, and a minimum distance D between the first groove segment (31) and the center of curvature of the inner circular surface (22) of the body are defined by the following formula 2: $β = - 10 \times log \left\{\frac{1}{{\left⌈\left(1-\frac{E - D}{E}\right)\times C\right⌉}^{2}}\right\} , β \geq 42.3 ,$
**characterized in that**
the expansion angle C, in angular degrees, is 152, 155, 151, 151, 156, 156.5 and 158; and
wherein corresponding values for β, in angular degrees, are 42.5, 42.7, 42.5, 42.3, 42.6, 42.7 and 42.6 respectively.

2. The high-frequency rotating structure as claimed in claim 1, wherein an arch length of each of the first arcuate surfaces (231) is greater than an arch length of each of the second arcuate surfaces (232).

3. The high-frequency rotating structure (10) as claimed in claim 1 or 2, wherein each of the first distances A is respectively between the second groove segment (32) and the adjacent second arcuate surface (232), and each of the second distances B is respectively between the magnetic barrier space and the adjacent second arcuate surface (232).

4. The high-frequency rotating structure (10) as claimed in claim 1, wherein α is 122%, 117%, 116%, 110%, 103%, 98.5% or 95.6%.

## Patentansprüche

1. Hochfrequenzrotationsstruktur (10), welche umfasst:
ein Drehelement (20) mit einem ringförmigen Körper (21), wobei sich eine innere Kreisfläche (22) in einer Kreisform entlang einer axialen Richtung einer Drehachse des Körpers erstreckt und sich an einer inneren Randseite des Körpers befindet, und wobei sich eine äußere Ringfläche (23) ohne eine perfekte Rundheit entlang einer axialen Richtung einer Drehachse des Körpers erstreckt und sich an einer äußeren Randseite des Körpers befindet, wobei die äußere Ringfläche (23) durch das Verbinden einer Vielzahl von ersten bogenförmigen Flächen (231) mit einer Vielzahl von zweiten bogenförmigen Flächen (232) ausgebildet ist;
eine Vielzahl von Aufnahmerillen (30), die nacheinander an dem Körper entlang einer Umfangsrichtung des Körpers angeordnet sind und voneinander beabstandet sind, und sich in der axialen Richtung des Körpers bis zu einer vorgegebenen Tiefe erstrecken, und sich entlang der Umfangsrichtung des Körpers bis zu einer vorbestimmten Breite erstrecken, die zumindest größer als die Hälfte einer Bogenlänge der ersten bogenförmigen Fläche (231) ist;
eine Vielzahl von magnetischen Baugruppen (50), die jeweils in einer der Aufnahmerillen (30) aufgenommen sind; und
eine Vielzahl von lochförmigen magnetischen Barriereräumen (40), die jeweils in dem Körper angeordnet sind, und jeweils mit einem der zwei Enden in einer Breitenrichtung von jeder der Aufnahmerillen (30) in Verbindung stehen,
wobei ein kürzester erster Abstand A zwischen einer Rillenwand von jedem der beiden Enden in einer Breitenrichtung von jeder der Aufnahmerillen (30) und der äußeren Ringfläche (23), und ein kürzester zweiter Abstand B zwischen einer Lochwand von jedem der magnetischen Barriereräume (40) und der äußeren Ringfläche (23) durch die folgende Formel 1 definiert sind: $α = \frac{A}{B} \times 100 % , 122 % \geq α \geq 90 % ,$
wobei jede der Aufnahmerillen (30) sich jeweils an einem Teil des Körpers befindet,
der mit einer der ersten bogenförmigen Flächen (231) korrespondiert, und jede der Aufnahmerillen (30) umfasst ferner ein erstes Rillensegment (31), und zwei zweite Rillensegmente (32), die jeweils mit zwei Enden des ersten Rillensegments (31) verbunden sind, und jeder der magnetischen Barriereräume (40) steht mit jedem der zweiten Rillensegmente (32) in Verbindung,
wobei ein Ausdehnungswinkel C, in Winkelgrad, zwischen dem ersten Rillensegment (31) und jedem der zweiten Rillensegmente (32), ein maximaler Abstand E zwischen der ersten bogenförmigen Fläche (231) und einem Krümmungsmittelpunkt der inneren Kreisfläche (22) des Körpers, und ein minimaler Abstand D zwischen dem ersten Rillensegment (31) und dem Krümmungsmittelpunkt der inneren Kreisfläche (22) des Körpers durch die folgende Formel 2 definiert sind: $β = - 10 \times log \left\{\frac{1}{{\left⌈\left(1-\frac{E - D}{E}\right)\times C\right⌉}^{2}}\right\} , β \geq 42 , 3 ,$
**dadurch gekennzeichnet, dass**
der Ausdehnungswinkel C, in Winkelgrad, 152, 155, 151, 151, 156, 156,5 und 158 ist; und
wobei korrespondierende Werte für β, in Winkelgrad, jeweils 42,5, 42,7, 42,5, 42,3, 42,6, 42,7 und 42,6 sind.

2. Hochfrequenzrotationsstruktur nach Anspruch 1, bei welcher eine Bogenlänge von jeder der ersten bogenförmigen Flächen (231) größer ist als eine Bogenlänge von jeder der zweiten bogenförmigen Flächen (232).

3. Hochfrequenzrotationsstruktur (10) nach Anspruch 1 oder 2, bei welcher jeder der ersten Abstände A sich jeweils zwischen dem zweiten Rillensegment (32) und der benachbarten zweiten bogenförmigen Fläche (232) befindet, und jeder der zweiten Abstände B sich jeweils zwischen dem magnetischen Barriereraum und der benachbarten zweiten bogenförmigen Fläche (232) befindet.

4. Hochfrequenzrotationsstruktur (10) nach Anspruch 1, bei welcher α 122%, 117%, 116%, 110%, 103%, 98,5% oder 95,6% ist.

## Revendications

1. Structure rotative à haute fréquence (10) comprenant :
un élément rotatif (20) présentant un corps annulaire (21), une surface circulaire intérieure (22) en forme de cercle s'étendant le long d'une direction axiale d'un axe de rotation du corps et située sur un côté périphérique intérieur du corps, et une surface annulaire extérieure (23) sans rondeur parfaite s'étendant le long d'une direction axiale d'un axe de rotation du corps et située sur un côté périphérique extérieur du corps, la surface annulaire extérieure (23) étant formée en reliant une pluralité de premières surfaces arquées (231) à une pluralité de secondes surfaces arquées (232) ;
une pluralité de rainures de réception (30) agencées séquentiellement sur le corps le long d'une direction circonférentielle du corps et espacées les unes des autres, et s'étendant dans la direction axiale du corps jusqu'à une profondeur prédéterminée, et s'étendant le long de la direction circonférentielle du corps jusqu'à une largeur prédéterminée au moins supérieure à la moitié d'une longueur d'arc de la première surface arquée (231) ;
une pluralité d'ensembles magnétiques (50) respectivement reçus dans chacune des rainures de réception (30) ; et
une pluralité d'espaces de barrière magnétique en forme de trous (40) respectivement disposés dans le corps, et respectivement en communication avec l'une de deux extrémités dans un sens de la largeur de chacune des rainures de réception (30),
dans laquelle une première distance la plus courte A entre une paroi de rainure de chacune des deux extrémités dans un sens de la largeur de chacune des rainures de réception (30) et la surface annulaire extérieure (23), et une seconde distance la plus courte B entre une paroi de trou de chacun des espaces de barrière magnétique (40) et la surface annulaire extérieure (23) sont définies par la formule 1 suivante : $α = \frac{A}{B} \times 100 % , 122 % \geq α \geq 90 % ,$
dans laquelle chacune des rainures de réception (30) est respectivement située sur une partie du corps correspondant à chacune des premières surfaces arquées (231), et chacune des rainures de réception (30) comprend en outre un premier segment de rainure (31) et deux seconds segments de rainure (32) respectivement reliés à deux extrémités du premier segment de rainure (31), et chacun des espaces de barrière magnétique (40) est en communication avec chacun des seconds segments de rainure (32),
dans laquelle un angle d'expansion C, en degrés angulaires, entre le premier segment de rainure (31) et chacun des seconds segments de rainure (32), une distance maximale E entre la première surface arquée (231) et un centre de courbure de la surface circulaire intérieure (22) du corps et une distance minimale D entre le premier segment de rainure (31) et le centre de courbure de la surface circulaire intérieure (22) du corps sont définis par la formule 2 suivante : $β = - 10 \times log \left\{\frac{1}{{\left|\left(1-\frac{E - D}{E}\right)\times C\right|}^{2}}\right\} , β \geq 42 , 3 ,$
**caractérisée en ce que**
l'angle d'expansion C, en degrés angulaires, est de 152, 155, 151, 151, 156, 156,5 et 158 ; et
dans laquelle les valeurs correspondantes pour β, en degrés angulaires, sont 42,5, 42,7, 42,5, 42,3, 42,6, 42,7 et 42,6, respectivement.

2. Structure rotative à haute fréquence selon la revendication 1, dans laquelle une longueur d'arc de chacune des premières surfaces arquées (231) est supérieure à une longueur d'arc de chacune des secondes surfaces arquées (232).

3. Structure rotative à haute fréquence (10) selon la revendication 1 ou 2, dans laquelle chacune des premières distances A est respectivement entre le second segment de rainure (32) et la seconde surface arquée adjacente (232), et chacune des secondes distances B est respectivement entre l'espace de barrière magnétique et la seconde surface arquée adjacente (232).

4. Structure rotative à haute fréquence (10) selon la revendication 1, dans laquelle α est 122 %, 117 %, 116 %, 110 %, 103 %, 98,5 % ou 95,6 %.
